# EUROPÄISCHE PATENTSCHRIFT

(11) **EP 2 948 994 B1**
(45) Veröffentlichungstag und Bekanntmachung des Hinweises auf die Patenterteilung: **02.05.2018**
(21) Anmeldenummer: 13798705.3
(22) Anmeldetag: 03.12.2013
(51) Int. Cl.: H01M 10/615, H01M 10/0525, H01M 10/6554, H01M 10/613, H01M 2/10, H01M 10/04

(54) **VERFAHREN ZUM HERSTELLEN EINES ENERGIESPEICHERS**
METHOD FOR PRODUCING AN ENERGY ACCUMULATOR
PROCÉDÉ DE FABRICATION D'UN ACCUMULATEUR D'ÉNERGIE

(30) Priorität: 23.01.2013 DE 102013201052
(43) Veröffentlichungstag der Anmeldung: 02.12.2015
(73) Patentinhaber: Robert Bosch GmbH, 70442 Stuttgart (DE)
(72) Erfinder: TUECHERT, Carsten, 70199 Stuttgart (DE); RAISCH, Sven Robert, 70565 Stuttgart (DE); SCHMIEDERER, Dirk, 70806 Kornwestheim (DE); BADER, Maximilian, 70191 Stuttgart (DE)
(86) Internationale Anmeldenummer: PCT/EP2013/075407
(87) Internationale Veröffentlichungsnummer: WO 2014/114392

(56) Entgegenhaltungen:
- WO-A2-03/071616
- WO-A2-2012/092993
- JP-A- 2010 040 420

## Beschreibung

Die vorliegende Erfindung betrifft ein Verfahren zum Herstellen eines Energiespeichers. Die vorliegende Erfindung betrifft insbesondere ein Verfahren zum Herstellen eines Energiespeichers mit einer Temperierplatte, auf der wenigstens eine elektrochemische Zelle befestigt ist.

### Stand der Technik

Energiespeicher, wie beispielsweise Lithium-Ionen-Batterien, sind in vielen täglichen Anwendungen weit verbreitet. Sie werden beispielsweise in Computern, wie etwa Laptops, Mobiltelefonen, Smartphones und bei anderen Anwendungen eingesetzt. Auch bei der zur Zeit stark vorangetriebenen Elektrifizierung von Fahrzeugen, wie etwa Kraftfahrzeugen, bieten derartige Batterien Vorteile.

Lithium-Ionen-Zellen als Bestandteile von Lithium-Ionen-Batterien weisen dabei herkömmlicherweise eine metallische Hülle auf. Üblicherweise werden mehrere dieser Zellen zu einem Batteriemodul verbaut, wobei wiederum mehrere, beispielsweise drei oder mehr, dieser Batteriemodule zu einem Batteriepack verbaut werden können.

Zum Zweck der Temperierung werden die Batteriemodule beziehungsweise Batteriepacks meist auf einer metallischen Kühlplatte montiert. Um einen Kurzschluss zwischen den Zellen und der metallischen Kühlplatte zu vermeiden, wird dabei zwischen den Zellen und der metallischen Platte ein elektrischer Isolator angebracht.

Aus dem Dokument DE 10 2011 002 415 A1 ist eine Temperierplatte für eine galvanische Zelle bekannt. Eine derartige Temperierplatte ist insbesondere Teil eines Zellgehäuses, wie beispielsweise der Deckel eines Zellgehäuses.

### Offenbarung der Erfindung

Gegenstand der vorliegenden Erfindung ist ein Verfahren zum Herstellen eines elektrochemischen Energiespeichers, aufweisend die Verfahrensschritte:
a) Bereitstellen einer Temperierplatte, wobei die Temperierplatte zumindest teilweise ein wärmeleitendes Material aufweist, und wobei zumindest ein Kontaktbereich der Temperierplatte plastisch wobei die Deformierbarkeit bei der Ausübung eines Drucks von größer oder gleich 0,1 N/cm² für einen Zeitraum kleiner als eine Stunde vorliegt;
c) Druckbasiertes aufbringen wenigstens einer Zelle auf wenigstens einen Kontaktbereich; wobei durch die wenigstens eine Zelle der Kontaktbereich plastisch deformiert wird und eine vollflächige Kontaktierung zwischen dem Kontaktbereich und der wenigstens einen Batteriezelle ausgebildet wird und
d) Erhärten zumindest des wenigstens einen Kontaktbereichs der Temperierplatte.
wobei die plastische Deformation des Kontaktbereichs nach dem Erhärten erhalten bleibt. Ein elektrochemischer Energiespeicher kann im Sinne der vorliegenden Erfindung insbesondere jegliche Batterie umfassen. Insbesondere kann ein Energiespeicher neben einer Primär-Batterie vor allem eine Sekundär-Batterie, also einen wieder aufladbaren Akkumulator, umfassen. Eine Batterie kann dabei ein galvanisches Element oder eine Mehrzahl an untereinander verbundenen galvanischen Elementen umfassen oder sein. Beispielsweise kann ein Energiespeicher einen lithiumbasiertern Energiespeicher wie etwa eine Lithium-Ionen-Batterie umfassen. Dabei kann unter einem lithiumbasierten Energiespeicher wie etwa einer Lithium-Ionen Batterie insbesondere ein derartiger Energiespeicher verstanden werden, dessen elektrochemische Prozesse während eines Lade- beziehungsweise Entladevorgangs zumindest teilweise auf Lithiumionen basieren.

Unter einer Temperierplatte kann ferner im Sinne der vorliegenden Erfindung verstanden werden ein insbesondere plattenförmiges Element, welches dazu ausgestaltet sein kann, durch einen wärmeleitenden beziehungsweise thermischen Kontakt mit wenigstens einer Zelle diese zu temperieren, also beispielsweise Wärme von der Temperierplatte zu der Zelle oder von der Zelle zu der Temperierplatte zu leiten. Dazu kann die Temperierplatte beispielsweise wenigstens eine Temperierstruktur aufweisen. Beispielsweise kann eine Temperierplatte eine für Energiespeicher grundsätzlich bekannte Kühlplatte sein.

Ein wärmeleitendes Material kann im Sinne der vorliegenden Erfindung insbesondere ein Material sein, welches eine Wärmeleitfähigkeit aufweist, die, gemessen bei 20 °C Umgebungstemperatur und 50 % Luftfeuchte, in einem Bereich von größerer oder gleich 0,2 W/m*K liegt, insbesondere in einem Bereich von größerer oder gleich 0,5 W/m*K liegt.

Ein deformierbarer Bereich der Temperierplatte kann ferner im Sinne der vorliegenden Erfindung ein Bereich sein, der beispielsweise plastisch oder elastisch deformierbar ist unter für einen großtechnischen Herstellungsprozess geeigneten Bedingungen. Insbesondere kann eine Deformierbarkeit vorliegen bei der Ausübung eines Drucks in einem Bereich von größer oder gleich 0,1 N/cm² für einen Zeitraum von kleiner als einer Stunde, insbesondere kleiner als einer Minute, beispielsweise kleiner als fünf Sekunden, bevorzugt kleiner als zwei Sekunden.

Unter einem Kontaktbereich der Temperierplatte kann weiterhin verstanden werden ein Bereich beziehungsweise eine Position insbesondere an der Oberfläche der Temperierplatte, welcher beziehungsweise welche dazu vorgesehen ist, um wenigstens eine Zelle dort zu positionieren. Bei dem Vorsehen nur einer Zelle kann beispielsweise nur ein Kontaktbereich vorgesehen sein. Bei dem Vorsehen von mehr als einer Zelle kann weiterhin ein vergrößerter Kontaktbereich oder eine Mehrzahl von Kontaktbereichen vorgesehen sein. Somit kann der Kontaktbereich insbesondere bezüglich seiner Ausdehnung entlang der Oberfläche als auch bezüglich seiner Tiefe in das Material hinein angepasst sein an die Größe beziehungsweise der Dimensionen der aufzubringenden wenigstens einen Zelle.

Ein vorbeschriebenes Verfahren ermöglicht es, auf kostengünstige Weise eine stabile Fixierung wenigstens einer Zelle auf einer Temperierplatte zu verbinden mit einem verbesserten Wärmeleitpfad, um eine verbesserte Temperierung der wenigstens einen Zelle zu ermöglichen.

Hierzu umfasst das vorbeschriebene Verfahren bei einem ersten Verfahrensschritt a) ein Bereitstellen einer Temperierplatte, wobei die Temperierplatte zumindest teilweise ein wärmeleitendes Material aufweist, beispielsweise zumindest teilweise aus einem wärmeleitenden Material ausgebildet ist, etwa vollständig aus einem wärmeleitenden ausgebildet ist. Dadurch, dass die Temperierplatte zumindest teilweise ein wärmeleitendes Material aufweist, kann in einem fertiggestellten Zustand die Temperierplatte eine gute und effektive Temperierung der wenigstens einen Zelle bewerkstelligen. Dabei kann das gesamte Material der Temperierplatte aus einem wärmeleitenden Material ausgestaltet sein, oder das wärmeleitende Material kann auf einzelne Bereiche begrenzt sein, welche einen oder eine Mehrzahl von Wärmeleitkanälen ausbilden können. Wärmeleitkanäle können beispielsweise in einer Matrix aus einem nicht wärmeleitfähigen Material angeordnet sein.

Beispielsweise kann die Temperierplatte zusätzlich zu dem wärmeleitenden Material einen oder mehrere Temperiermittelkanäle zum Führen eines Temperiermittels durch die Temperierplatte und/oder eine oder mehrere Temperierrippen zum Abführen von Wärme umfassen. So kann vorteilhafterweise die Effektivität des Wärmeleitpfads deutlich verbessert werden. Grundsätzlich kann es sich bei dem Temperiermittel um ein flüssiges, gasförmiges oder festes Temperiermittel handeln. Insbesondere kann das Temperiermittel ein flüssiges oder gasförmiges Temperiermittel sein. Dabei kann die Temperierplatte mindestens einen Temperiermitteleinleitungsanschluss zum Einleiten eines flüssigen oder gasförmigen Temperiermittels in den oder die Temperiermittelkanäle und mindestens einen Temperiermittelableitungsanschluss zum Ableiten des flüssigen oder gasförmigen Temperiermittels aus dem oder den Temperiermittelkanälen umfassen.

Die Temperierung beziehungsweise die Ausbildung des Wärmeleitpfades kann dabei dadurch verbessert werden, dass zumindest ein Kontaktbereich der Temperierplatte deformierbar ist oder durch einen Energieeintrag in einen deformierbaren Zustand überführbar ist. Das kann bedeuten, dass entweder die gesamte Temperierplatte aus einem derartigen Material ausgebildet ist, oder nur ein oder eine Mehrzahl von Kontaktbereichen der Temperierplatte, auf welchem die wenigstens eine Zelle beziehungsweise die Mehrzahl von Zellen angeordnet und fixiert werden. Somit kann zumindest ein Kontaktbereich der Temperierplatte beispielsweise ein Material aufweisen, welches elastisch deformierbar ist oder durch einen Energieeintrag, wie beispielsweise eine Behandlung durch eine Wärmequelle, oder durch eine Quelle elektromagnetischer Strahlung, in einen elastischen Zustand überführt wird. Weiterhin kann die ein Kontaktbereich der Temperierplatte beispielsweise ein Material aufweisen, welches plastisch deformierbar ist oder durch einen Energieeintrag in einen plastisch deformierbaren Zustand überführt wird, wie dies später erläutert wird. Folglich kann das Material in einem definierten Bereich, insbesondere wie oben definiert, elastisch oder plastisch deformierbar sein.

Insbesondere dann, wenn ein deformierbarer Zustand nicht bereits unter Normalbedingungen, also insbesondere Raumtemperatur (22°C), vorliegt, sondern das entsprechende Material in einen deformierbaren Zustand gebracht werden kann, kann dies bei dem vorbeschriebenen Verfahren in dem Verfahrensschritt b) erfolgen, welcher Verfahrensschritt b) ein Bringen wenigstens eines Kontaktbereichs der Temperierplatte in einen deformierbaren Zustand durch einen Energieeintrag aufweist. Somit wird zumindest wenigstens ein Kontaktbereich oder die gesamte Temperierplatte durch einen Energieeintrag wie vorstehend beschrieben, also durch eine Behandlung mit Wärme, elektromagnetischer Strahlung, oder Ähnlichem, in einen deformierbaren beziehungsweise plastisch oder elastisch verformbaren Zustand gebracht.

Insbesondere kann in letzterem Fall zumindest ein Kontaktbereich der Temperierplatte durch einen Energieeintrag über seinen Schmelzbereich oder seinen Glasübergangsbereich bringbar sein. In dieser Ausgestaltung kann das Material der Temperierplatte beziehungsweise des Kontaktbereichs oder der Kontaktbereiche der Temperierplatte besonders einfach und definiert in einen deformierbaren Zustand überführt werden. Im Detail kann das entsprechende Material durch einen Wärmeeintrag, etwa durch einen Heizstrahler oder Ähnliches, auf eine Temperatur erhitzt werden, welche oberhalb des Schmelzbereichs beziehungsweise der Schmelztemperatur oder des Glasübergangsbereichs beziehungsweise der Glasübergangstemperatur liegt. In diesem Zustand kann das Material problemlos deformiert werden, wobei im Anschluss ein Erhärten beziehungsweise vollständiges Aushärten beispielsweise durch ein bloßes Abkühlen erfolgen kann, wie dies später im Detail erläutert wird.

Vorzugsweise wenn die Temperierplatte beziehungsweise zumindest ein Kontaktbereich der Temperierplatte in einem deformierbaren Zustand ist, erfolgt in einem weiteren Verfahrensschritt c) ein Aufbringen wenigstens einer auf Zelle wenigstens einen Kontaktbereich. Beispielsweise kann eine Zelle oder eine geeignete Mehrzahl von Zellen derart auf dem Kontaktbereich oder den Kontaktbereichen angeordnet werden, dass durch die Zelle ein Teil des deformierbaren Materials deformiert beziehungsweise verformt wird und somit ein sehr inniger Kontakt zwischen der Zelle beziehungsweise dem Zellgehäuse und dem Kontaktbereich beziehungsweise den Kontaktbereichen der Temperierplatte erhalten wird. Hierdurch passt sich die Oberfläche der Temperierplatte durch ein bloßes Eindrücken an die fertigungsbedingte Unebenheit der Zellen an und egalisiert diese, wodurch ein vollflächiger Kontakt zwischen Zelle und Temperierplatte entsteht. Durch den resultierenden geringeren Widerstand des Wärmeleitpfades lässt sich eine effizientere Temperierung der Zellen realisieren.

Dies gilt insbesondere für die Kanten der Zellgehäuse, an denen konstruktionsbedingt die größte Wärmemenge abzuführen ist. Dadurch kann sich die Lebensdauer der Zellen aufgrund einer effizienteren Temperierung deutlich erhöhen. Somit kann durch das vorbeschriebene Verfahren ausgeglichen werden, dass beispielsweise aufgrund der geringen mechanischen Flexibilität und der fertigungsbedingten Unebenheit sowohl des Zellbodens als auch gegebenenfalls und materialabhängig der Temperierplatte beim Aufbringen der Zellen ein vollflächiger Kontakt nur begrenzt möglich ist. Vielmehr kann durch das vorbeschriebene Verfahren dagegen eine vollflächige Kontaktierung von Zelle und Temperierplatte realisiert werden, was zu einer Vergrößerung der zur Wärmeübertragung vorhandenen nutzbaren Fläche und daher zu einer besonders effizienten und homogenen Temperierung der Zelle führen kann.

Nach einem Aufbringen wenigstens einer Zelle auf wenigstens einen Kontaktbereich wird gemäß Verfahrensschritt d) zumindest der wenigstens eine Kontaktbereich der Temperierplatte erhärtet beziehungsweise erstarrt beziehungsweise ausgehärtet. Dies kann realisierbar sein durch ein bloßes aktives oder passives Abkühlen des Materials für den beispielhaften Fall, dass sich das entsprechende Material durch einen Energieeintrag in einen insbesondere plastisch deformierbaren Zustand überführen lassen kann. Alternativ kann dies durch eine Vernetzungsreaktion realisierbar sein, für den beispielhaften Fall, dass das entsprechende Material bereits bei Raumtemperatur etwa elastisch verformbar ist. Beispielsweise in diesem Fall kann etwa ein Eindrücken der wenigstens einen Zelle in das deformierbare Material bis zum Beenden des Aushärtens anhalten und dabei durch einen Energieeintrag eine Vernetzungsreaktion in Gang gesetzt werden. Somit kann ein Erhärten beispielsweise realisiert werden durch das Beenden oder Starten eines Energieeintrags. Somit kann ein Erhärten im Wesentlichen in Abhängigkeit des gewählten Materials des Kontaktbereichs oder der Kontaktbereiche der Temperierplatte erfolgen.

Um einen stabilen Verbund der Zelle beziehungsweise der Mehrzahl an Zellen und der Temperierplatte zu erzeugen, können die Zellen zusätzlich zu dem vorgenannten Verfahren miteinander verspannt und über Endplatten gegebenenfalls mit der Temperierplatte verbunden, wie etwa verschraubt oder verspannt werden.

Ferner können die beispielsweise durch ein Einstecken beziehungsweise Eindrücken der Zellen auftretende Spannungen in der Temperierplatte etwa durch eine Temperaturbehandlung und den resultierenden beschleunigten Kriechvorgang beispielsweise in einem thermoplastischen Polymer reduziert werden.

Weiterhin kann die Temperierplatte zumindest teilweise ein elektrisch isolierendes Material aufweisen, beispielsweise zumindest teilweise aus einem elektrisch isolierenden Material ausgebildet sein, etwa vollständig aus einem elektrisch isolierenden Material ausgebildet sein. In dieser Ausgestaltung kann ferner darauf verzichtet werden, um beispielsweise einen Kurzschluss zu vermeiden, zur elektrischen Isolierung zwischen Batteriezellen und Temperierplatte einen elektrischen Isolator vorzusehen und/oder die Zellen mit einem elektrisch isolierenden Werkstoff einzuwickeln beziehungsweise zu beschichten. Dadurch kann der Fertigungsaufwand minimiert werden, was zur Senkung der Fertigungskosten beiträgt. Des Weiteren kann das Gesamtgewicht des Moduls gesenkt und somit die Leistungsdichte des Systems erhöht werden. Weiterhin reduziert sich so der Widerstand des Wärmeleitpfades zwischen Batteriezellgehäuse und Temperierplatte, da auf zusätzlich eingebrachte Beschichtungen und/oder Wickelschichten aus elektrisch isolierendem Werkstoff verzichtet werden kann. Dadurch kann eine effektivere Temperierung der Zellen realisiert werden. Diese trägt zu einer Lebensdauererhöhung des Modulpakets maßgeblich bei. Weiterhin kann eine Einsparung von Bauraum innerhalb des Moduls und somit von Werkstoffkosten möglich sein. Darüber hinaus kann verhindert werden, dass sich elektrisch leitfähige Partikel, mit denen das System während der Montage kontaminiert wird, aufgrund mechanischer Lasten einen Kurzschluss hervorrufen. Zum anderen kann verhindert werden, dass, wenn bei nicht ordnungsgemäßer Montage aufgrund eines Aufreibens der isolierenden Schicht/Schichten untereinander die elektrische Isolierung verloren geht, dies zu einem Kurzschluss führt.

Ein elektrisch isolierendes Material kann im Sinne der vorliegenden Erfindung dabei insbesondere ein Material sein, welches einen elektrischen Oberflächenwiderstand aufweist, der in einem Bereich von größer oder gleich 10^12 Ohm liegt.

Für die nicht elektrisch isolierend beschichteten Zellen mit metallischem Zellgehäuse, beispielsweise einem Aluminiumgehäuse, kann jedoch eine weitere elektrische Isolierung beziehungsweise Stabilitätssteigerung vorgesehen sein. Insbesondere können dabei, nicht beschränkend nach dem Erhärten beziehungsweise Aushärten, zur gegenseitigen elektrischen Isolierung beispielsweise Kunststoffplatten und/oder Kunststofffolien zwischen den Zellen angeordnet werden, oder die Zellen können sich in einem Kunststoffgehäuse mit einzelnen Fächern befinden. Dies kann somit insbesondere einer elektrischen Isolierung der Zellen untereinander dienen und vermindert den Wärmeleitpfad von der Zelle oder den Zellen zu der Temperierplatte nicht.

Dabei ist es für den Fachmann verständlich, dass die vorgenannten Verfahrensschritte unabhängig voneinander, unmittelbar folgend oder zumindest teilweise zusammen beziehungsweise gleichzeitig durchgeführt werden können.

Im Rahmen einer Ausgestaltung kann die Temperierplatte zumindest teilweise aus einem Material ausgestaltet sein, welches ausgewählt ist aus der Gruppe bestehend aus Polyethylen, Polypropylen, Polyamid, Polybutylenterephthalat, Polyphenylensulfid, Polycarbonat, etwa für unter Energieeintrag deformierbar gestaltbare Materialien, oder auch Polyurethan für ein bereits bei Raumtemperatur elastisch deformierbares und vernetzbares Material. Derartige Materialien können eine vorteilhafte elektrische Isolationsfähigkeit aufweisen und ferner eine Wärmeleitfähigkeit aufweisen, welche für viele Anwendungen mit geringer Hitzeentwicklung, beispielsweise, und somit einem geringen Bedarf an Temperierung ausreicht. Als beispielhafte Anwendung sei hier ein rein elektrisch angetriebenes Fahrzeug genannt. In dieser Ausgestaltung kann die Temperierplatte ferner besonders einfach und kostengünstig herstellbar sein.

Im Rahmen einer weiteren Ausgestaltung kann mindestens ein zur Temperierung vorgesehener Abschnitt der Temperierplatte aus einem Kunststoffcompound ausgebildet sein, welcher mindestens ein Additiv zur Erhöhung der Wärmeleitfähigkeit umfasst.

Unter einem Kunststoffcompound kann im Sinne der vorliegenden Erfindung insbesondere ein Verbundstoff verstanden werden, welcher neben einem oder mehreren Grundpolymeren, wie etwa Polypropylen, mindestens ein Additiv zur Modifizierung der Grundpolymereigenschaften umfasst.

Unter einem Additiv zur Erhöhung der Wärmeleitfähigkeit kann im Sinne der vorliegenden Erfindung insbesondere ein Additiv verstanden werden, welches die spezifische Wärmeleitfähigkeit des Kunststoffcompounds, bezogen auf die spezifische Wärmeleitfähigkeit des Kunststoffcompounds ohne das wärmeleitfähigkeitserhöhende Additiv, erhöht.

Vorzugsweise ist der mindestens eine zur Wärmeableitung vorgesehene und gegebenenfalls temperierkanalbegrenzende Abschnitt aus einem Kunststoffcompound ausgebildet, welcher, gemessen bei 20 °C Umgebungstemperatur und 50 % Luftfeuchte, eine spezifische Wärmeleitfähigkeit λ, von größer oder gleich 0,5 W / (m·K), insbesondere von größer oder gleich 0,7 W/(m·K), beispielsweise von größer oder gleich 1 W/ (m·K), und einen spezifischen elektrischen Widerstand p von größer oder gleich 1.10⁻⁵ Ω·m, insbesondere von größer oder gleich 1.10⁻¹ Ω·m, beispielsweise von größer oder gleich 1·10⁴ Ω·m, aufweist.

Vorzugsweise weist das Additiv oder weisen die Additive zur Erhöhung der Wärmeleitfähigkeit, gemessen bei 20 °C Umgebungstemperatur und 50 % Luftfeuchte, eine spezifische Wärmeleitfähigkeit λ, von größer oder gleich 10 W/ (m·K), insbesondere von größer oder gleich 20 W / (m·K), beispielsweise von größer oder gleich 50 W / (m·K), und/oder einen spezifischen elektrischen Widerstand p von größer oder gleich 1·10⁻⁵ Ω·m, insbesondere von größer oder gleich 1·10⁻¹ Ω·m, beispielsweise von größer oder gleich 1·10⁴ Ω·m, auf.

Beispielsweise kann das Additiv zur Erhöhung der Wärmeleitfähigkeit ein keramisches Material sein. Zum Beispiel kann das Additiv zur Erhöhung der Wärmeleitfähigkeit Bornitrid, Aluminiumoxid, Aluminiumhydroxid, Magnesiumhydroxid, Magnesiumoxid oder eine Kombination davon sein.

Vorzugsweise ist dabei mindestens ein Abschnitt der Temperierplatte, welcher zur Wärmeableitung vorgesehen ist und welcher beispielsweise an mindestens eine Temperierstruktur zumindest teilweise angrenzt und/oder mindestens eine Temperierstruktur zumindest teilweise ausbildet, aus einem Kunststoffcompound ausgebildet, welcher mindestens ein Additiv zur Erhöhung der Wärmeleitfähigkeit umfasst. Insbesondere kann der mindestens eine zur Wärmeableitung vorgesehene, aus einem wärmeleitfähigkeitsadditivierten Kunststoffcompound ausgebildete Abschnitt der Temperierplatte an die mindestens eine Temperierstruktur zumindest teilweise angrenzen und/oder die mindestens eine Temperierstruktur zumindest teilweise ausbilden.

Im Rahmen einer weiteren Ausgestaltung kann zwischen wenigstens einem Kontaktbereich der Temperierplatte und wenigstens einer Zelle ein Wärmeleitmedium angeordnet werden. Ein derartiges Medium kann zum einem noch weiter zum Toleranzausgleich beitragen und die Wärmeübertragung zwischen Zelle und Temperierplatte noch weiter verbessern und damit zur Verminderung des Wärmewiderstands zwischen Zellgehäuse und Temperierplatte beitragen. Dabei ist es aufgrund der möglichen elektrisch isolierenden Ausgestaltung der Temperierplatte nicht schädlich, wenn das wärmeleitende insbesondere elastische Medium eine geringe Festigkeit aufweist, da ein Durchdrücken des Zellgehäuses auf die Temperierplatte, etwa aufgrund der mechanischen Belastungen im Gebrauch, ein Kurzschluss vermieden werden kann. Ein Durchdrücken kann dabei grundsätzlich sogar vorteilhaft sein, da ein lokaler Kontakt zwischen Zellboden und Temperierplatte zu einem verringerten Wärmewiderstand führt. Die toleranz- und unebenheitsbedingten Bereiche ohne direkten Kontakt zwischen Zellboden und Kühlplatte sind durch das Medium mit beispielsweise geringer Dicke gefüllt, was den Wärmewiderstand weiter herabsetzt. Hierzu kann bei einem Aufbringen der wenigstens einen Zelle etwa das Wärmeleitmedium soweit deformiert/verdrängt werden, dass ein direkter Kontakt zwischen Zellboden und Kühlplatte resultieren kann, der einen geringen Wärmeübergangswiderstand aufweist.

Im Rahmen einer weiteren Ausgestaltung kann das wärmeleitende Medium elektrisch isolierend sein. Ein Vorteil dieser Ausgestaltung kann insbesondere die geringere Anfälligkeit gegenüber Kurzschlüssen sein, was eine weiter verbesserte Langlebigkeit und Sicherheit ermöglichen kann. Darüber hinaus sind in dieser Ausgestaltung auch Ausführungen der Temperierplatte möglich, die nicht oder nicht vollständig elektrisch isolierend sind.

Im Rahmen einer weiteren Ausgestaltung kann das wärmeleitende Medium elastisch sein und/oder eine Bruchdehnung in einem Bereich von größer oder gleich 10 % aufweisen. In dieser Ausgestaltung kann der Vorteil erzielbar sein, dass das wärmeleitende Medium mit hoher Bruchdehnung Unterschiede im Wärmeausdehnungskoeffizienten zwischen Temperierplatte und Zelle ausgleichen kann, die sonst bei Temperaturwechseln zu einer Ablösung und Verschlechterung der Wärmeübertragung führen könnten. Beispielsweise kann das Wärmeleitmedium wenigstens ein silikonbasiertes Material umfassen, wie etwa den Wärmeleitkleber, der unter der Bezeichnung Q1-9226 der Firma Dow Corning ® erhältlich ist.

Beispielsweise kann als Wärmeleitmedium somit ein Wärmeleitkleber und/oder eine Wärmeleitfolie Verwendung finden, etwa aus einem wärmeleitfähig modifizierten Elastomer beziehungsweise thermoplastischen Elastomer, welche/r zwischen der Zelle und der Temperierplatte angeordnet ist. So kann vorteilhafterweise die Wärmeableitung verbessert werden.

Im Rahmen einer weiteren Ausgestaltung kann Verfahrensschritt c) durch ein druckbasiertes Aufbringen wenigstens einer Zelle auf den Kontaktbereich durchgeführt werden. Insbesondere durch ein druckbasiertes Aufbringen der wenigstens einen Zelle auf die Temperierplatte kann ein Eindrücken der Zelle in das Material des wenigstens einen Kontaktbereichs besonders vorteilhaft erfolgen und dadurch das Material an der Temperierplattenoberfläche an das Gehäuse der Zellen angepasst und ein vollflächiger Kontakt realisiert werden. Dadurch kann eine besonders große Stabilität und ferner ein besonders effektiver Wärmeleitpfad ermöglicht werden. Der ausgeübte Druck kann dabei an die Verformbarkeit des Kontaktbereichs und an die gewünschte Eindringtiefe angepasst werden.

Im Rahmen einer weiteren Ausgestaltung kann eine Mehrzahl von Zellen auf die Temperierplatte aufgebracht werden. Im Rahmen dieser Ausführungsform des Verfahrens zum Herstellen eines Energiespeichers ist die Zellaufnahme zur Aufnahme und Temperierung von zwei oder mehr galvanischen Zellen, insbesondere den galvanischen Zellen eines Batteriemoduls, beispielsweise von größer oder gleich 4 bis kleiner oder gleich 20, zum Beispiel von größer oder gleich 6 bis kleiner oder gleich 18, galvanischen Zellen, ausgelegt. Dies hat den Vorteil, dass die einzelnen Batteriemodule individuell zusammengestellt und an den zur Verfügung stehenden Raum angepasst angeordnet werden können. Darüber hinaus kann in dieser Ausgestaltung ein besonders kostengünstiges Herstellungsverfahren des Energiespeichers möglich sein. Ferner kann eine besonders gute Temperierung der Zellen ermöglicht werden und dabei ferner die Stabilität des Energiespeichers verbessert werden.

Hinsichtlich weiterer technischer Merkmale und Vorteile des erfindungsgemäßen Verfahrens wird hiermit explizit auf die Erläuterungen im Zusammenhang mit dem erfindungsgemäßen Energiespeicher verwiesen.

Gegenstand der vorliegenden Erfindung ist ferner ein Energiespeicher, hergestellt nach einem wie vorstehend beschrieben ausgestalteten Verfahren. Ein derartiger insbesondere elektrochemischer Energiespeicher kann den Vorteil einer besonders effektiven Temperierbarkeit seiner Batteriezellen und ferner einer besonders stabilen und kostengünstigen Herstellbarkeit ermöglichen. Ein derartiger Energiespeicher kann grundsätzlich jegliche Art von Energiespeicher sein, insbesondere eine Batterie, wie etwa ein wieder aufladbarer Akkumulator. Beispielsweise kann der Energiespeicher ein Lithium-Ionen-Akkumulator sein. Mögliche Anwendungsgebiete umfassen hierbei elektrisch angetriebene Fahrzeuge, Computer, wie etwa Laptops, Mobiltelefone, Smartphones, elektrische Werkzeuge und weitere Anwendungen, wie beispielsweise vollständig elektrisch angetriebene Fahrzeuge (EV) oder teilweise elektrisch angetriebene Fahrzeuge (Hybridfahrzeuge, PHEV).

Im Detail kann ein vorbeschriebener Energiespeicher ein lithiumbasierter Energiespeicher, wie etwa eine Lithium-Ionen-Batterie, sein. Seine Anode und die Kathode können grundsätzlich in an sich bekannter Weise wie für einen Energiespeicher bekannt ausgestaltet sein. Für den rein beispielhaften Fall einer Lithium-Ionen-Batterie kann die Anode eine Elektrode sein, welche metallisches Lithium umfasst oder Lithium interkallieren kann. Die Kathode kann dabei beispielhaft NMC oder Lithium-Cobalt-Oxid (LiCoO₂) aufweisen. Dabei kann das Kathodenmaterial gegebenenfalls in einem Binder, wie beispielsweise Polyvinylidenfluorid (PVDF) etwa zusammen mit einem Leitzusatz, wie etwa einer elektrisch leitfähigen Kohlenstoffverbindung, beispielsweise Graphit, vorliegen. Der Elektrolyt kann ein Lösungsmittel umfassen, in dem ein oder mehrere elektrisch leitfähige Salze gelöst sind. Beispielsweise können aprotische Lösungsmittel, wie beispielsweise Ethylencarbonat, Propylencarbonat, Dimethylcarbonat oder Diethylcarbonat Verwendung finden. Weiterhin kann als elektrisch leitfähiges Salz Lithiumhexafluorophosphat (LiPF₆) verwendet werden.

Weiterhin kann zwischen Anode und Kathode in an sich bekannter Weise ein Separator angeordnet sein, um die Anode und die Kathode räumlich voneinander zu trennen, um insbesondere einen Kurzschluss zu verhindern. Der Separator kann dabei beispielsweise umfassen oder ausgebildet sein aus insbesondere porösen Kunststofffolien, Glasfasergeweben, oder auch insbesondere porösen Keramikwerkstoffen, wie etwa Keramikgeweben. Dabei kann der Elektrolyt beispielsweise innerhalb des Separators beziehungsweise Poren des Separators angeordnet sein.

Grundsätzlich kann als in einem Zellraum angeordnetes galvanisches Element beziehungsweise als Batteriezelle eine auch als Jelly Roll bezeichnete Anordnung aus Elektrodenmaterialien, also Anode beziehungsweise Kathode, Aktivmaterial, Elektrolyt und gegebenenfalls Separator vorgesehen sein. Beispielsweise diese Zellen können etwa in ein Gehäuse aus Aluminium zu einer Batteriezelle verbaut und mehrere dieser Batteriezellen zu einem Batteriemodul verbaut werden.

Hinsichtlich weiterer technischer Merkmale und Vorteile des erfindungsgemäßen Energiespeichers wird hiermit explizit auf die Erläuterungen im Zusammenhang mit dem erfindungsgemäßen Verfahren verwiesen.

## Patentansprüche

1. Verfahren zum Herstellen eines elektrochemischen Energiespeichers, aufweisend die Verfahrensschritte:
a) Bereitstellen einer Temperierplatte aus Kunststoff, wobei die Temperierplatte zumindest teilweise ein wärmeleitendes Material aufweist, und wobei zumindest ein Kontaktbereich der Temperierplatte plastisch deformierbar ist, wobei die Deformierbarkeit bei der Ausübung eines Drucks von größer oder gleich 0,1N/cm² für einen Zeitraum kleiner als eine Stunde vorliegt;
c) Druckbasiertes Aufbringen wenigstens einer Zelle auf wenigstens einen Kontaktbereich, wobei durch die wenigstens eine Zelle der Kontaktbereich plastisch deformiert wird und eine vollflächige Kontaktierung zwischen dem Kontaktbereich und der wenigstens einen Batteriezelle ausgebildet wird und
d) Erhärten zumindest des wenigstens einen Kontaktbereichs der Temperierplatte, wobei die plastische Deformation des Kontaktbereichs nach dem Erhärten erhalten bleibt.

2. Verfahren nach Anspruch 1, wobei das Erhärten durch eine Vernetzungsreaktion realisiert wird.

3. Verfahren nach einem der vorhergehenden Ansprüche, wobei eine Temperierplatte bereitgestellt wird, die zumindest teilweise ein elektrisch isolierendes Material aufweist.

4. Verfahren nach einem der vorhergehenden Ansprüche, wobei die Temperierplatte zumindest teilweise aus einem Material ausgestaltet ist, welches ausgewählt ist aus der Gruppe bestehend aus Polyethylen, Polypropylen, Polyamid, Polybutylenterephthalat, Polyphenylensulfid, Polycarbonat, Polyurethan.

5. Verfahren nach einem der vorhergehenden Ansprüche, wobei mindestens ein zur Temperierung vorgesehener Abschnitt der Temperierplatte aus einem Kunststoffcompound ausgebildet ist, welcher mindestens ein Additiv zur Erhöhung der Wärmeleitfähigkeit umfasst.

6. Verfahren nach einem der vorhergehenden Ansprüche, wobei zwischen wenigstens einem Kontaktbereich der Temperierplatte und wenigstens einer Zelle ein Wärmeleitmedium angeordnet wird.

7. Verfahren nach Anspruch 6, wobei das Wärmeleitmedium elektrisch isolierend ist.

8. Verfahren nach einem der Ansprüche 6 oder 7, wobei das Wärmeleitmedium eine Bruchdehnung in einem Bereich von größer oder gleich 10% aufweist.

9. Verfahren nach einem der Ansprüche 1 bis 9, wobei eine Mehrzahl von Zellen auf die Temperierplatte aufgebracht wird.

## Claims

1. Method for producing an electrochemical energy accumulator, comprising the method steps of:
a) providing a temperature-control plate of plastic, the temperature-control plate at least partly comprising a thermally conductive material, and at least one contact region of the temperature-control plate being plastically deformable, the deformability being obtained when a pressure of greater than or equal to 0.1 N/cm² is exerted for a period of time of less than one hour;
c) applying at least one cell in a pressure-based manner to at least one contact region, the contact region being plastically deformed by the at least one cell and full surface-area contact being produced between the contact region and the at least one battery cell, and
d) hardening at least the at least one contact region of the temperature-control plate, the plastic deformation of the contact region being retained after the hardening.

2. Method according to Claim 1, the hardening being achieved by a crosslinking reaction.

3. Method according to one of the preceding claims, a temperature-control plate that at least partly comprises an electrically insulating material being provided.

4. Method according to one of the preceding claims, the temperature-control plate being at least partly formed from a material selected from the group consisting of polyethylene, polypropylene, polyamide, polybutylene terephthalate, polyphenylene sulfide, polycarbonate and polyurethane.

5. Method according to one of the preceding claims, at least one portion of the temperature-control plate that is intended for the temperature control being formed from a polymer compound that comprises at least one additive for increasing the thermal conductivity.

6. Method according to one of the preceding claims, a heat conducting medium being arranged between at least one contact region of the temperature-control plate and at least one cell.

7. Method according to Claim 6, the heat conducting medium being electrically insulating.

8. Method according to either of Claims 6 and 7, the heat conducting medium having an elongation at break in a range of greater than or equal to 10%.

9. Method according to one of Claims 1 to 9, a plurality of cells being applied to the temperature-control plate.

## Revendications

1. Procédé de fabrication d'un accumulateur électrochimique d'énergie, le procédé présentant les étapes suivantes :
a) prévoir une plaque de maintien de chaleur en matière synthétique, au moins une partie de la plaque de maintien de chaleur présentant un matériau thermoconducteur et au moins une partie de contact de la plaque de maintien de chaleur pouvant être déformée plastiquement, la déformabilité étant présente pendant une durée inférieure à une heure lors de l'application d'une pression supérieure ou égale à 0,1 N/cm²,
c) application à l'aide d'une poussée d'au moins une cellule sur au moins une zone de contact, la zone de contact étant déformée plastiquement par la ou les cellules et un contact étant formé sur toute la surface de la zone de contact et de la ou des cellules de batterie et
d) durcissement de la ou des zones de contact de la plaque de maintien de chaleur, la déformation plastique de la zone de contact se maintenant après le durcissement.

2. Procédé selon la revendication 1, dans lequel le durcissement est réalisé par une réaction de réticulation.

3. Procédé selon l'une des revendications précédentes, qui prévoit une plaque de maintien de chaleur dont au moins une partie présente un matériau électriquement isolant.

4. Procédé selon l'une des revendications précédentes, dans lequel au moins une partie de la plaque de maintien de chaleur est réalisée en un matériau sélectionné dans l'ensemble constitué du polyéthylène, du polypropylène, du polyamide, du poly(téréphtalate de butylène), du poly(sulfure de phénylène), du polycarbonate et du polyuréthane.

5. Procédé selon l'une des revendications précédentes, dans lequel au moins une partie de la plaque de maintien de chaleur prévue pour le maintien de la chaleur est formée d'un composite de matière synthétique qui comporte au moins un additif augmentant la conductivité thermique.

6. Procédé selon l'une des revendications précédentes, dans lequel un fluide thermoconducteur est disposé entre au moins une zone de contact de la plaque de maintien de chaleur et au moins une cellule.

7. Procédé selon la revendication 6, dans lequel le fluide thermoconducteur est électriquement isolant.

8. Procédé selon l'une des revendications 6 ou 7, dans lequel le fluide thermoconducteur présente un allongement à la rupture supérieur ou égal à 10 %.

9. Procédé selon l'une des revendications précédentes, 1 à 9, dans lequel plusieurs cellules sont placées sur la plaque de maintien de chaleur.
